# EUROPEAN PATENT APPLICATION

(11) **EP 3 933 732 A1**
(43) Date of publication of application: **05.01.2022**
(21) Application number: 20183054.4
(22) Date of filing: 30.06.2020
(51) Int. Cl.: G06Q 20/22, G06Q 20/32, G06Q 20/36, G06Q 20/02, G06Q 20/34

(54) **DEVICE-BASED DYNAMIC PAYMENT ACCOUNT SELECTION**

(71) Applicant: Mastercard International Incorporated, Purchase NY 10577 (US)
(72) Inventor: JOHNSON, Alan, Maldon, Essex CM9 8HW (GB); NOË, James Christian, West Wickham, BR4 0BL (GB); TIERNEY, John, Merseyside, CH60 7TF (GB)
(74) Representative: Gill Jennings & Every LLP

(57) **Abstract**

The invention relates to techniques for enabling a user to use a mobile communication device to effect a payment using a preferred payment account that is distinct from a payment account associated with authorisation data obtained at a point of sale terminal from the mobile communication device. An encrypted unique identifier corresponding to the preferred payment account is embedded in the authorisation data that is sent to the point of sale terminal from the mobile device. A payment network computing device extracts the encrypted unique identifier, decrypts it and generates a modified authorisation request message containing the decrypted unique identifier for onward processing of the transaction. In this way, the transaction is funded by the preferred payment account.

## Description

### FIELD OF INVENTION

The invention relates generally to the generation and processing of authorisation data associated with transaction data, and more particularly to the generation and processing of authorisation data where the recipient of the transaction data is dynamically selectable by a user.

### BACKGROUND

There is an increasing demand for users to be able to link multiple funding accounts with a single payment card or payment token, whereby the user can select which funding account they wish to use for a given transaction either before, during or after the transaction.

This has the benefit of allowing users to reduce the number of payment cards they need to carry with them or store in a digital wallet, and also allows users to fund a purchase using a funding account whose associated card may otherwise not be accepted by a given merchant.

As the payment card or payment token is provided by a single primary issuer, having multiple funding accounts associated with the payment card or payment token additionally provides a way to link transactions funded by accounts held with different issuers, thereby enabling information from such transactions to be collated by the primary issuer.

However, implementing such a payment mechanism is technically challenging and creates technical problems including how to provide a secure indication of the funding account in a way that is compatible with existing systems, and how to identify this funding account in real time during the transaction without introducing a significant delay that is detrimental to user experience.

Additional technical problems arise in authenticating and verifying such payments, as the cryptogram associated with the payment card or payment token will generally be different to the cryptogram associated with the funding account.

### SUMMARY OF THE INVENTION

In a first aspect the invention provides a computer-implemented method of initiating a payment transaction, comprising: receiving, at a mobile communication device, an authorisation data request from a point of sale, POS, terminal; retrieving, by the mobile communication device, authorisation data comprising a first unique identifier and an encrypted second unique identifier, the first unique identifier associated with the mobile communication device and a main issuer and the encrypted second unique identifier associated with a second issuer; and sending, by the mobile communication device, the authorisation data to the POS terminal in response to the authorisation data request.

In a second aspect the invention provides a computer-implemented method of processing a payment transaction, comprising: receiving, at an authorisation server of a payment processing network, an authorisation request message, the authorisation request message including a first unique identifier and an encrypted second unique identifier, the first unique identifier associated with a mobile communication device and a main issuer and the encrypted second unique identifier associated with a second issuer; extracting, by the authorisation server, the authorisation data from the transaction message; decrypting, by the authorisation server, the encrypted second unique identifier to obtain an unencrypted second unique identifier; determining, by the authorisation server, the second issuer based on the unencrypted second unique identifier; generating, by the authorisation server, a modified authorisation request message, the modified authorisation request message containing the unencrypted second unique identifier; and sending, by the authorisation server to a computing device of the second issuer, the modified authorisation request.

In a third aspect the invention provides a mobile communication device configured to perform the method of the first aspect.

In a fourth aspect the invention provides a payment processing network computer configured to perform the method of the second aspect.

Broadly speaking, the invention relates to techniques for enabling a user to use a mobile communication device to effect a payment using a preferred payment account that is distinct from a payment account associated with authorisation data obtained at a point of sale terminal from the mobile communication device. An encrypted unique identifier corresponding to the preferred payment account is embedded in the authorisation data that is sent to the point of sale terminal from the mobile device. A payment network computing device extracts the encrypted unique identifier, decrypts it and generates a modified authorisation request message containing the decrypted unique identifier for onward processing of the transaction. In this way, the transaction is funded by the preferred payment account.

### BRIEF DESCRIPTION OF THE DRAWINGS

Embodiments of the present invention are described below, by way of example only, with reference to the accompanying drawings, in which:
Figure 1 illustrates in schematic form a system suitable for implementing aspects of the invention;
Figure 2 is a flow diagram setting out a method of initiating a payment transaction performed by a mobile communication device according to an embodiment;
Figures 3A and 3B are flow diagrams setting out further optional steps of the method of Figure 2;
Figure 3C illustrates in schematic form an exemplary user interface that enables a user to select a preferred payment account;
Figure 4 is a flow diagram setting out a method of processing a payment transaction performed by a computing device of a payment processing network according to an embodiment;
Figure 5 is a flow diagram setting out further optional steps of the method of Figure 4; and

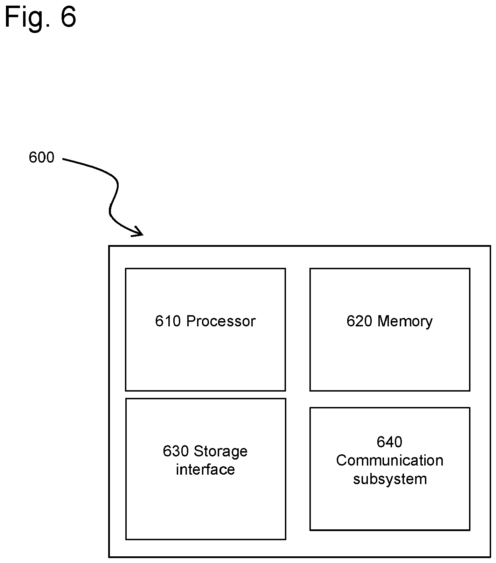

Figure 6 shows in schematic form a data processing device that is suitable for performing the functions of components of the system shown in Figure 1.

### DETAILED DESCRIPTION

In the following description aspects of the invention are described in the context of electronic payments. It will be appreciated however that the invention has application in contexts outside of electronic payments, specifically to any environment in which an electronic message is sent using multiple identification credentials.

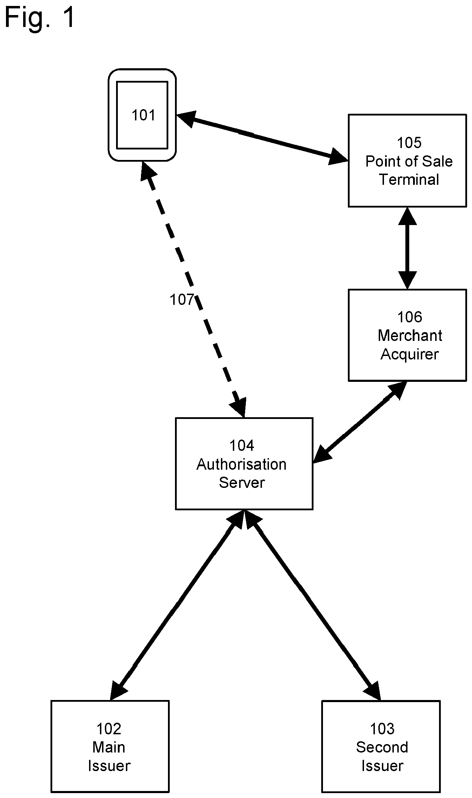

Figure 1 shows an example of a system suitable for implementing embodiments of the present invention.

The system includes a mobile communication device 101 operated to a user, a primary issuer computing device 102, a secondary issuer computing device 103, an authorisation server 104 of a payment network, a point of sale (POS) terminal 105 and a merchant acquirer computing device 106. The mobile communication device 101 may be a smartphone, tablet, laptop, wearable device, etc.; essentially any data processing device capable of fulfilling the requirements of the invention as detailed below.

The mobile communication device 101 is capable of communicating via a data connection, such as a WiFi 3G, 4G and/or 5G antennas, and comprises elements capable of communicating with other similarly enabled computing devices (e.g. POS 105), e.g. a near field communication (NFC) antenna, a Bluetooth^{®} antenna and/or a Bluetooth^{®} Low Energy antenna.

The mobile communication device 101 is also capable of performing cryptographic processes to enable secure authentication of a user of the mobile communication device, e.g. in line with EMV^{®} specifications. The mobile communication device 101 has stored thereon a payment account unique identifier, e.g. payment account number (PAN) or encrypted or tokenised PAN (tPAN), that can be used to identify a payment account associated with the user. This payment account unique identifier is associated with a main issuer and is referred to in the following as a device PAN (DPAN) or equivalently a 'first unique identifier' .

The mobile communication device 101 additionally has stored thereon one or more preferred payment account identifiers that can each be used to identify a respective preferred payment account that is different from the payment account associated with the payment account unique identifier. Each preferred payment account is associated with a second issuer, which may be the same as the first issuer, or different. The preferred payment account identifiers are stored in an encrypted form, and encrypted in a manner that enables a payment network server such as authorisation server 104 to decrypt them. Preferred payment account identifiers may be for use in single or multiple transactions. The preferred payment account identifier is referred to in the following as a preferred PAN (PPAN), or equivalently an 'encrypted second unique identifier'.

The mobile communication device 101 may also have securely stored thereon a cryptographic tool such as cryptographic keys or means for deriving cryptographic keys. The cryptographic tool is associated with a cryptographic tool of the main issuer such that a cryptogram generated by the mobile communication device 101 using the cryptographic tool can be used by the main issuer to confirm that the user of the mobile communication device 101 has been authenticated.

For example, the mobile communication device 101 may have stored thereon an issuer master key that may be used to derive a session key for generating a cryptogram based on data supplied to the mobile communication device 101 from a merchant point of sale, POS, terminal 105. The cryptogram may be verified by the main issuer, which has access to an issuer master key and is able to derive a corresponding session key to verify the main cryptogram. It will be appreciated that the main cryptogram is linked to the main issuer, meaning that a second, different issuer that does not have access to the main issuer master key cannot use the cryptogram to authenticate the user. That is, an issuer associated with a PPAN in general will not be able to verify a cryptogram generated in respect of a DPAN.

The authorisation server 104 is communicatively coupled to the main issuer computing device 102, second issuer computing device 103 and merchant acquirer computing device 106, e.g. via a public network such as the internet, or a private network, virtual private network, or a combination thereof. The authorisation server 104 can also communicate with the mobile communication device 101 through a separate out of band communication channel 107, i.e. via a communication channel that is distinct from the communication channels used between the authorisation server 104 and the main issuer computing device 102, second issuer computing device 103 and merchant acquirer computing device 106. This communication channel 107 can be a 3G, 4G, 5G or WiFi-via-internet channel, for example.

The authorisation server 104 is configured to receive authorisation requests generated by POS terminal 105 and routed to the authorisation server 104, e.g. via the merchant acquirer 106, and to authorise a request from a user based on the content of the authorisation requests. Main issuer 102 and second issuer 103 may be involved in the authorisation process.

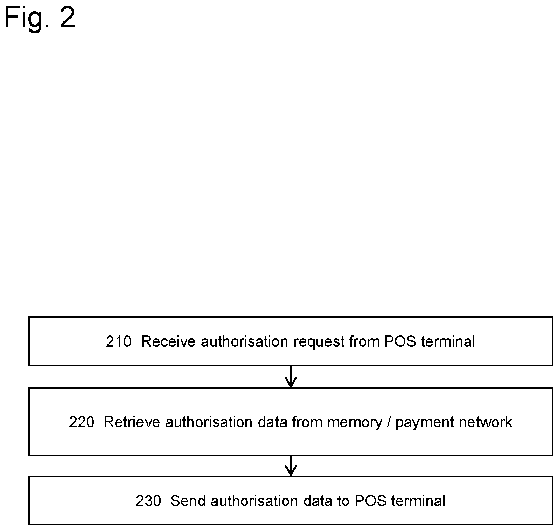

Exemplary methods of initiating and processing payment transactions are now described in relation to Figs. 2 to 5.

Referring first to Fig. 2, at step 210 the mobile communication device 101 receives a request for authorisation data from the POS terminal 105. For example, the POS terminal 105 may send the request for authorisation data in response to the user bringing the mobile communication device 101 into the vicinity of the POS terminal 105 in order to initiate a transaction, e.g. within NFC range in a 'tap' operation of the type known in the art per se.

The authorisation data request may include transaction details such as a transaction amount, a merchant name, an unpredictable number generated by the POS terminal 105, a transaction type indicating that the transaction is a contactless transaction made face-to-face at a POS terminal, a transaction date and/or time, and other transaction details as may be described in EMV^{®} contactless payment specification.

Following receipt of the authorisation data request, in step 220 the mobile communication device 101 retrieves authorisation data comprising a DPAN that can be used to identify a payment account associated with the main issuer, and an encrypted PPAN that can be used to identify a payment account associated with a second issuer. The second issuer may be the same as the main issuer, or different.

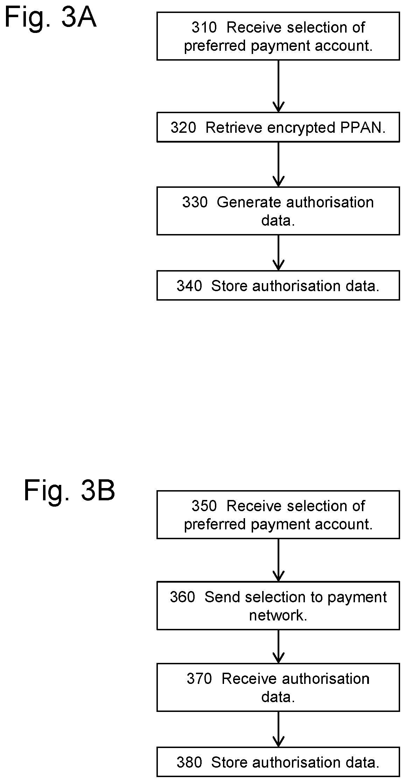

As described later in more detail in connection with Fig. 3A, the authorisation data may be retrieved from a memory of the mobile communication device 101. Alternatively, as shown in Fig. 3B, the authorisation data may be received from authorisation server 104 via channel 107. It is preferred that this option is made use of only where channel 107 is a stable channel of relatively high bandwidth so that the authorisation data can be downloaded by the mobile communication device 101 in a short time, e.g. less than two seconds, preferably less than one second. This is because consumers are used to a device-based payment transaction (e.g. a contactless transaction) lasting a short time, e.g. a few seconds or less, such that introducing a significant delay whilst the authorisation data is retrieved would be detrimental to consumer experience. A suitable type of channel 107 for this alternative may be, but is not limited to, a 4G or 5G data connection, or a WiFi connection.

The encrypted PPAN may be stored as an encrypted file in a memory of the mobile communication device 101. The PPAN may be embedded in chip data stored in the memory, which chip data may be formatted according to the EMV^{®} specification. The chip data may be stored in a secure element of mobile communication device 101, or in an encrypted file. The PPAN may be stored within a Track 2 data field within the chip data as defined in the EMV^{®} specification, e.g. in the format defined by ISO Standard 7813 or ANSI X4.16. The PPAN may alternatively be stored within the chip data in a Track 2 equivalent data field as defined within the EMV^{®} specification, e.g. within EMV^{®} tag 57, and formatted according to the ISO/IEC 7813 standard.

Alternatively the encrypted PPAN may be stored in a data element or tag that is included as part of an electronic message that is transmitted from mobile communication device 101 to POS terminal 105. An example of a suitable tag is the Issuer Application Data tag as defined within the EMV^{®} specification, also known as EMV^{®} tag 9F10. Other suitable tags will be apparent to a skilled person having the benefit of the present disclosure.

In one particular exemplary implementation in which a DPAN of 16 digits is associated with the mobile communication device 101, the PPAN is 16 digits and the Track 2 equivalent data field is used to store the PPAN, the Track 2 equivalent data field may appear as follows:

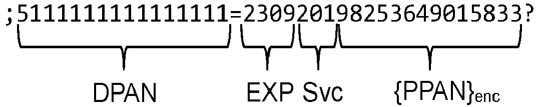

Here, 'EXP' refers to an expiry date associated with the PPAN (YYMM format) and 'Svc' refers to a service code associated with the PPAN. The symbol {}_{enc} indicates that the PPAN is stored in encrypted form. The symbols ';', '=' and '?' are delimiters that may be used to delimit each section of the Track 2 equivalent data field. The numbers and delimiters shown here are purely illustrative and should not be interpreted as limiting in any way.

In this illustrative example the DPAN is stored in a PAN field of the Track 2 equivalent data. The PPAN is stored in a discretionary data field within the Track 2 equivalent data. The discretionary data field has space for only 14 digits, so two digits of the PPAN have been omitted as there is insufficient space for the full 16 digit PPAN in combination with the expiry date and service code. The two omitted digits may include a check digit, e.g. a Luhn check digit as generated by the known Luhn algorithm, which will be determinable from the other digits of the PPAN. The check digit may be the last digit of the PPAN. A digit of the PPAN, e.g. the first digit, may be the same as the corresponding digit of the DPAN and hence extractable from the DPAN stored in the Track 2 equivalent data field. This is one exemplary way in which the full 16 digits of the PPAN can be determined.

It will be appreciated that this particular implementation is purely exemplary and that the invention is not restricted to storing a PPAN in the Track 2 equivalent data field in this way. For example, the sequence number field of the chip data could be used to store two additional digits of the PPAN, so that all 16 digits are stored in the chip data. As another alternative, the service code field Svc could be used to store two additional digits of the PPAN, overwriting the actual service code. A dynamic expiry date could also be used , where the expiry date is mapped to a value which in this exemplary case is a two digit value. The mapping scheme may define a start date corresponding to the value '00', such that the value mapped to any given date is determinable by calculating the number of months between the start date and the given date. For example, if the start date is March 2020 (2003 in yy/mm format), the date May 2020 (2005 in yy/mm format) has a corresponding value '02'. By defining a valid range of values for the dynamic expiry as any value that is at most 100 months in the future from the start date, all values from '00' to '99' can be encoded using this scheme, enabling any two digits missing from the PPAN to be encoded in the expiry date field.

It will be appreciated that repurposing of existing fields in this manner advantageously provides compatibility with existing POS devices and chip data formats because no changes to either are necessary. Instead, changes to software at the payment network enable the PPAN to be extracted from the chip data, which changes may be relatively easier to implement that updating a large number (e.g. tens of thousands or hundreds of thousands, or more) of POS devices and mobile communication devices.

Having set out above some exemplary encoding schemes, it will be appreciated that the invention is not limited to any particular encoding scheme and instead encompasses any encoding scheme in which any missing digits of the PPAN can be determined by generating the missing digit(s) based on the 14 digits of the PPAN that are provided and/or by reference to data stored in other fields in the chip data.

The mobile communication device 101 generates a cryptogram (hereafter "main cryptogram") based on the DPAN and optionally other transaction details. The other transaction details may comprise transaction data generated by POS terminal 105 and provided to mobile communication device 101. The transaction data may comprise any one of more of: a transaction amount, a merchant name, an unpredictable number generated by POS terminal 105, a transaction type indicating that the transaction is a contactless transaction made face-to-face at a POS terminal, a transaction data and/or time, etc.

The other transaction details may also comprise data generated by mobile communication device 101, such as an ATC transaction counter as defined in the EMV^{®} specification. The main cryptogram can be generated according to the EMV^{®} standard and may be based on any other transaction data as described in EMV^{®} contactless payment specifications. As the main cryptogram is associated with the DPAN it can be verified by the main issuer. The issuer associated with the PPAN typically will not have available to it the necessary cryptographic keys to validate the DPAN, nor will it expect to have to validate a cryptogram based on the DPAN.

Optionally, the main cryptogram can be generated based on both the DPAN and PPAN by including the PPAN data in the cryptogram generation calculation. This prevents man-in-the-middle type attacks where an attempt to tamper with the PPAN is made in transit between POS terminal 105 and onward transaction processing devices, e.g. an authorisation server of, or acting on behalf of, the main issuer. This is because any such tampering with the PPAN will cause the validation of the main cryptogram to fail, resulting in the transaction being declined.

Following generation of the main cryptogram, the mobile communication device 101 then sends the main cryptogram and the authorisation data to the POS terminal 105 in step 230, for example via NFC communication, for onward processing.

The actions of the POS terminal 105 following receipt of the main cryptogram and authorisation data from the mobile communication device 101 are conventional and so are not described in detail here. Suffice to say, once POS terminal 105 has received the main cryptogram and authorisation data, it generates an authorisation request message comprising the transaction details, the authorisation data and the main cryptogram and sends the authorisation request message to the merchant acquirer computing device 106. The authorisation request message may be formatted in accordance with the ISO 8583 standard with the main cryptogram being incorporated in data element 55. It will be appreciated that the authorisation request message itself is not conventional as it comprises the authorisation data that includes the DPAN and encrypted PPAN.

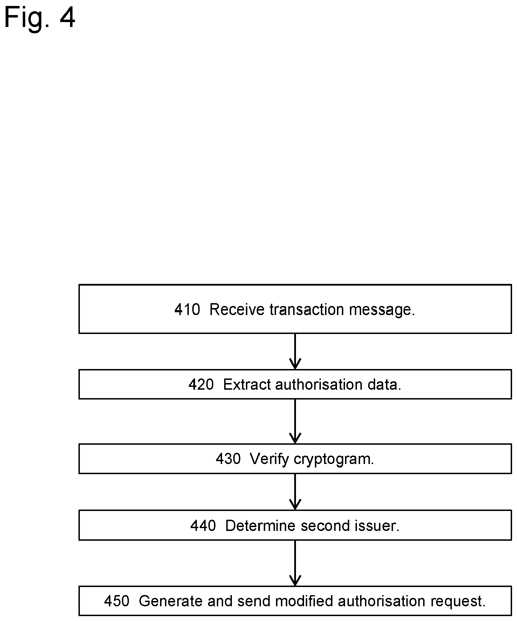

Payment network-side processing of the authorisation request message is described later in connection with Fig. 4. First, two alternative methods according to the invention by which a PPAN can be selected by a user using a data processing device such as mobile communication device 101 are described in connection with Figs. 3A and 3B. The PPAN that is to be used for a given transaction can be chosen by the user either prior to or during the transaction process in Fig. 2, e.g. before step 210 (Fig. 3A) or as part of step 220 (Fig. 3B).

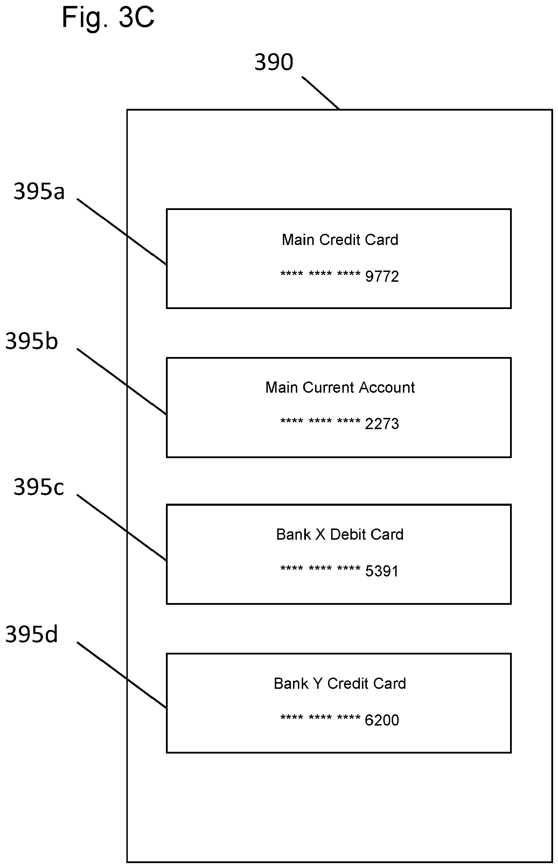

Referring first to Fig. 3A, the mobile communication device 101 receives a user selection of a preferred payment account in step 310. This may be through any suitable user input device, for example a touchscreen, mouse or keyboard. The selection may be one of available payment account options displayed on a display device of the mobile communications device, or it may alternatively be manually entered by the user. A dedicated application installed on the mobile communication device 101 may facilitate selection of the preferred payment account, or the user may make use of a web browser to log in to a portal facilitating payment account selection. Brief reference is made here to the user interface of Fig. 3C, discussed in detail later.

In step 320, the mobile communication device 101 retrieves an encrypted PPAN associated with the selection made in step 310. In this embodiment the encrypted PPAN is stored locally on the mobile communication device 101, e.g. in an encrypted file or a secure location such as a secure element.

In step 330, the mobile communication device 101 generates authorisation data based on the retrieved encrypted PPAN. This may involve generating chip data having the encrypted PPAN stored in the Track 2 data or Track 2 equivalent data in the manner described above. Other elements of the chip data may remain static, so mobile communication device 101 may generate the chip data by overwriting the Track 2 data or Track 2 equivalent data of chip data already present on the device with the retrieved encrypted PPAN.

Following this, mobile communication device 101 stores the generated authorisation data in step 340. The authorisation data can be stored in a secure element or encrypted file on the device. This authorisation data is thus ready to be transmitted to POS terminal 105 the next time mobile communication device 101 is used to initiate a payment transaction. In this way, the user is able to control which payment account is used to fund a given transaction.

In the event mobile communication device 101 is lost or stolen, the DPAN associated with that mobile communication device can be blacklisted or otherwise deactivated. Authorisation server 104 can be configured to ignore any attempts to modify the currently selected PPAN that originate from a mobile communication device with a blacklisted / deactivated DPAN, and also configured to decline any authentication request messages including a blacklisted / deactivated DPAN. This advantageously improves user convenience because the ability for a lost or stolen mobile communication device to participate in transactions can be disabled remotely and without any adverse effects to the user's payment accounts. Specifically, the user has no need to go through the lengthy and inconvenient process of cancelling payment cards following a loss or theft of their mobile communication device. Additionally, the user can quickly and easily obtain another DPAN in respect of a replacement mobile communication device, minimising inconvenience and disruption for the user.

It will be appreciated that the user may define one or more rules governing the selected of a preferred payment account, which rules may be used by mobile communication device 101 to automate the selection of a preferred payment account to some degree at least. For example, a rule may specify that a particular payment account is automatically elevated to preferred payment account based on a current geographical location of the mobile communication device 101, e.g. as provided by a GPS antenna of the mobile communication device. This may allow a user to automatically pay using a particular payment account for certain activities, e.g. visiting a store of a particular merchant or entering / leaving a station of a public transport system.

A rule may specify that a particular payment account is automatically elevated to preferred payment account based on the current date, time, and/or day of the week, enabling a user to automatically switch between business and personal accounts. Another rule may prevent certain payment accounts from being selected based on credentials supplied to unlock or otherwise access the mobile communication device and/or the application providing the payment account selection functionality. A further rule may make use merchant provided data at the time of the transaction, e.g. data provided by POS terminal 105, to select the payment account. The merchant provided data could be merchant category, for example. Combinations of rules are also possible. Other such rules will be apparent to a skilled person having the benefit of the present disclosure.

While it is possible for the user to select the preferred payment account in advance of initiating a transaction, this is not necessary. It is contemplated that the user may be presented with the option to select a preferred payment account, e.g. the user interface shown in Fig. 3C, as part of the initial stages of a payment transaction, e.g. at the point of sale. As part of the 'contactless tapping' process of bringing mobile communication device 101 proximate POS terminal 105 to effect payment, the user may select their preferred payment account, potentially in combination with providing authentication data such as biometric data, upon which selection the mobile communication device 101 performs the steps of Fig. 3A before contacting POS terminal 105 to initiate the transaction. User experience is advantageously maintained because the method of Fig. 3A involves local operations only and hence is a relatively quick process (e.g. completed in tens or hundreds of milliseconds) compared with the total time taken to execute a contactless payment (e.g. 1-3 seconds). The total time for the transaction to be processed is therefore imperceptible lengthened from the user's perspective, maintaining a good user experience.

Referring now to Fig. 3B, in an alternative embodiment to that of Fig. 3A, the encrypted PAN is retrieved from a payment network (e.g. authorisation server 104) rather than obtained locally from a memory of the mobile communication device 101.

In step 350, the mobile communication device 101 receives a user selection of a preferred payment account. This step is identical to step 310 of Fig. 3A and therefore is not described in detail again here.

In step 360, the mobile communication device 101 sends information relating to the selection to the payment network, e.g. authorisation server 104, and requests authorisation data corresponding to the selected payment account. The information sent enables the payment network to unambiguously identify the payment account that the user has selected and wishes to elevate to preferred payment account status. This may be, for example, the encrypted PPAN associated with the selected payment account, which encrypted PPAN may be stored on the mobile communication device 101. A token may be used in place of the encrypted PPAN. The token may be provided to mobile communication device 101 as part of a provisioning process in which a payment card associated with the selected payment account is provisioned on the mobile communication device 101.

In step 370, the mobile communication device 101 receives authorisation data corresponding to the selected payment account from the payment network. The authorisation data can be of the type discussed above in connection with step 330 of Fig. 3A. The authorisation data may be single use authorisation data, indicating that it is valid for use in one transaction only. In this case, mobile communication device 101 can either perform the complete method of Fig. 3B each time a payment is to be performed, or mobile communication device 101 can request N different single use authorisation data for respective use in N different transactions (N being an integer > 1). This latter option advantageously means that the number of calls made by mobile communication device 101 are reduced, whilst also offering increased security via the single-use aspect of the authorisation data.

In step 380, the mobile communication device 101 stores the authorisation data received in step 370. This authorisation data may be stored in an identical manner as described above in connection with step 340 of Fig. 3A. At this point, it will be apparent that the mobile communication device 101 is ready to take part in a payment transaction and to supply the encrypted PPAN to POS terminal 105 as discussed above in step 230 of Fig. 2.

The method of Fig. 3B can be performed as part of a payment transaction itself, e.g. as part of step 220 of Fig. 2. This mode of operation is preferred where the communication link 107 is a stable, relatively high bandwidth communication link, e.g. 4G, 5G or WiFi. This is because significant delay in retrieval of the authorisation data, e.g. 2 seconds or more, will be perceptible to the user and hence adversely affect user experience.

Moving on to Fig. 3C, an exemplary user interface 390 is shown in schematic form. A user of mobile communication device 101 can use user interface 390 to make a selection of a preferred payment account.

User interface 390 includes one or more graphical user interface elements 395a to 395d that each represent a payment account available to the user. Four are shown in Fig. 3C, but any number greater than or equal to one can be present. Each graphical user interface element includes one or more sub-elements that enable the user to unambiguously identify the payment account represented by the respective graphical user interface element. The sub-elements can be any combination of one or more of the following: a unique identifier associated with the payment account such as a PAN of a payment card associated with the payment account, or the bank account number and sort code of the payment account; a logo of a payment network provider (e.g. Mastercard^{®}) associated with the payment card; a logo of an issuer associated with the payment card; a descriptive name for the payment account, e.g. 'Bank X credit card', and the like. Elements of the unique identifier can be obscured for security reasons; e.g. some of the digits of the PAN may be replaced with another character such as '*' or '●', e.g. the first 12 digits of a 16 digit PAN may be obscured in this way. A bank account number and/or sort code may be similarly partially obscured. In the case where a descriptive name is present, the user may be able to modify this descriptive name, e.g. by selecting the name on the graphical user interface element 390.

The graphical user interface 390 may indicate to the user in some manner the sub-element that corresponds to the currently selected preferred payment account. For example, the relevant sub-element may be any combination of: located in a prominent position on graphical user interface 390, e.g. in a topmost position relative to the other sub-elements, in a leftmost position relative to the other sub-elements for left-to-right reading languages, in a rightmost position relative to the other sub-elements for right-to-left reading languages, highlighted, modified to include an additional component not present in any of the other sub-elements (e.g. a symbol), enlarged relative to the other sub-elements, labelled in some manner such as labelled with the number '1' or an equivalent character indicating 'first', coloured differently relative to the other sub-elements, shown in colour with the other sub-elements shown in grayscale, and the like. Many other possibilities for the configuration of the graphical user interface 390 will be apparent to a skilled person having the benefit of the present disclosure.

Moving now on to Fig. 4, a method is shown by which a payment network server such as authorisation server 104 can process a transaction involving a PPAN.

In step 410, the authorisation server 104 receives an authorisation request message from the POS terminal 105 (typically via a merchant acquirer server). As discussed above the authorisation request message is generated by the POS terminal 105 in a conventional manner, but the content of the authorisation request message is non-conventional at least because the authorisation request message contains both the DPAN and encrypted PPAN in the authorisation data.

In step 420, the authorisation server 104 extracts the authorisation data and the cryptogram from the authorisation request message and decrypts the encrypted PPAN to obtain an unencrypted PPAN, which can be used to identify the associated payment account and the secondary issuer. Step 420 may involve the authorisation server 104 determining that the authorisation request message contains embedded authorisation data of the type discussed herein and that it should therefore be processed in accordance with the invention. This determination may be based on examination of a subset of the DPAN received in the authorisation request message to determine whether this subset falls within a particular range, e.g. determining whether a Bank Identification Number (BIN) within the DPAN falls within a particular range of values (an account range').

In step 430, the cryptogram received in step 420 is verified. Verification may be performed by the authorisation server 104 itself, if it has access to the main issuer's cryptographic toolkit, or it may send the main cryptogram to the main issuer computing device 102 for verification, with a verification result then being returned to the authorisation server 104 from the primary issuer computing device 102.

Advantageously, in the case where main issuer computing device 102 performs the verification, this can be performed in a conventional manner based on the DPAN and suppled cryptogram, without the main issuer computing device 102 needing any knowledge of the PPAN. In this manner, advantageously the invention requires minimal or no modification to the configuration of the main issuer computing device 102.

Assuming verification is successful, the authorisation server 104 then determines the identity of the second issuer in step 440. The identity of the second issuer can be determined using a decrypted form of the PPAN embedded within the authorisation request message, to enable the authorisation request to be routed onwards to second issuer computing device 103. For example, a BIN may be extracted from the decrypted PPAN by authorisation server 104 in order to identify the second issuer.

Following identification of the second issuer, in step 450 authorisation server 104 generates a modified authentication request message and sends this to second issuer computing device 103 for authorisation. The modified authorisation request message differs from the authorisation request message at least in that a) it contains only the PPAN in unencrypted form; and b) it is directed to the second issuer computing device 103. From the perspective of second issuer computing device 103, the modified authorisation request message is simply an authorisation request relating to the payment account associated with the PPAN. The second issuer computing device 103 does not need to have any knowledge of the steps carried out previously, and in particular does not know about the embedding of the PPAN within the original authorisation request message that also included the DPAN. In this manner, advantageously the invention requires minimal or no modification to the configuration of second issuer computing device 103.

As is known in the art per se, authorisation requests of card present transactions (e.g. contactless transactions) typically include a cryptogram that is generated by mobile communication device 101. As will be appreciated from the discussion above, the main cryptogram generated by the mobile communications device 101 is associated with the DPAN and the main issuer. This cryptogram is typically not verifiable by the second issuer because the second issuer will in general not possess the necessary cryptographic toolkit to perform the verification of the DPAN. Additionally, the second issuer receives the modified authentication request which includes the PPAN not the DPAN, so an attempt to verify the DPAN-based cryptogram using the PPAN will fail even if the correct cryptographic toolkit is available to the second issuer.

Nevertheless, the second issuer 103 may expect to have to perform a cryptogram-based verification on a card present type transaction. This is not possible using the modified authorisation request message, and this can be addressed by the invention in several ways.

A first option is for the authorisation server 104 may set a verification flag in the modified authorisation request message to indicate that verification has already been performed (e.g. by the authorisation server 104 itself or by the primary issuer computing device 102). Second issuer computing device 103 can detect that the verification flag has been set to indicate that verification has already been performed and, in that case, forgo the usual verification process. In this way the invention advantageously requires minimal changes to the configuration of second issuer computing device 103.

Alternatively, instead of a verification flag the authorisation server 104 may itself generate a second cryptogram for inclusion in the modified transaction request message, where the second cryptogram is generated based on the PPAN. This second cryptogram can be verified by the second issuer computing device 103 as normal, advantageously requiring no modification to the configuration of second issuer computing device 103.

As a further alternative, authorisation server 104 may set a transaction type of the modified authorisation request message to a type for which verification using a cryptogram is not expected, e.g. a card not present (eCommerce) transaction type. In this case the second issuer computing device 103 will not expect to see a cryptogram in the authorisation request message and so will process this message without issue. Again, this advantageously requires no modification to the configuration of second issuer computing device 103.

Provided sufficient funds are available in the preferred payment account and all authentication criteria are met, the secondary issuer computing device 103 will approve the transaction and notify the authorisation server 104, which can in turn notify the POS terminal 106 via the merchant issuer computing device 106. This part of the transaction flow is conventional and so is not described in further detail here.

The invention thus provides methods and systems that are capable of enabling a user to select, via a mobile communication device, a payment account for funding a transaction that is distinct from payment account details provided by the mobile communication device to a POS terminal. This provides improved flexibility to the user without compromising the user experience at the POS terminal.

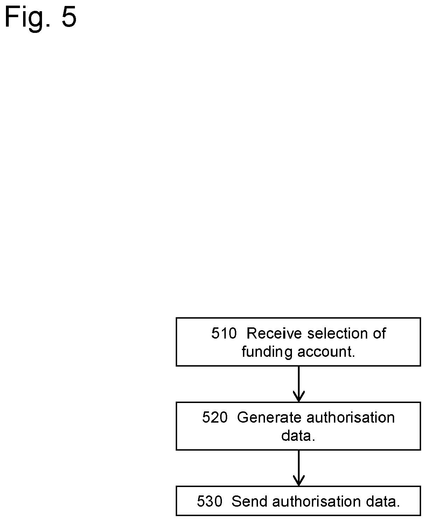

It will be apparent to a person skilled in the art that the methods described herein are all suitable for implementation by a data processing device. By way of example, Fig. 5 shows in schematic form a data processing device 600 that is suitable for performing the functions of the payment network server or the directory server.

Data processing device 600 includes a processor 610 for executing instructions. Instructions may be stored in a memory 620, for example. Processor 610 may include one or more processing units (e.g., in a multi-core configuration) for executing instructions. The instructions may be executed within a variety of different operating systems on the data processing device 600, such as UNIX, LINUX, Microsoft Windows^{®}, etc.

Processor 610 is operatively coupled to a communication subsystem 640 such that data processing device 600 is capable of communicating with a remote device.

Processor 610 may also be operatively coupled to a storage device such as storage medium via storage interface 630. The storage device is any computer-operated hardware suitable for storing and/or retrieving data. In some cases, e.g. a remotely located storage medium, communication subsystem 640 may perform the function of storage interface 630 such that these two entities are combined.

The storage medium can be integrated in data processing device 600, or it can be external to data processing device 600 and located remotely. For example, data processing device 600 may include one or more hard disk drives as a storage device. Alternatively, where the storage device is external to data processing device 600, it can comprise multiple storage units such as hard disks or solid state disks in a redundant array of inexpensive disks (RAID) configuration. The storage device may include a storage area network (SAN) and/or a network attached storage (NAS) system.

Processor 610 can be operatively coupled to the storage device via the storage interface 630. Storage interface 630 is any component capable of providing processor 610 with access to the storage device. Storage interface 630 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 610 with access to the storage device.

Memory 620 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method of initiating a payment transaction, comprising:
receiving, at a mobile communication device, a request for authorisation data from a point of sale, POS, terminal;
retrieving, by the mobile communication device, authorisation data comprising a first unique identifier and an encrypted second unique identifier, the first unique identifier associated with the mobile communication device and a main issuer and the encrypted second unique identifier associated with a second issuer; and
sending, by the mobile communication device, the authorisation data to the POS terminal in response to request for authorisation data.

2. The method of claim 1, further comprising:
receiving, via a user interface of the mobile communication device, a selection of a user interface element associated with the encrypted second unique identifier;
retrieving, from a memory of the mobile communication device, the encrypted second unique identifier;
generating, by the mobile communication device in response to the selection, the authorisation data using the encrypted second unique identifier; and
storing, by the mobile communication device, the authorisation data in the memory.

3. The method of claim 1, further comprising:
receiving, via a user interface of the mobile communication device from a user, a selection of a user interface element associated with the encrypted second unique identifier;
sending, by the mobile communication device, information relating to the selection to a payment network;
receiving, by the mobile communication device and responsive to the sending, authorisation data corresponding to the selection from the payment network; and
storing, by the mobile communication device, the authorisation data in a memory of the mobile communication device.

4. The method of claim **Error! Reference source not found.,** wherein the authorisation data is single use, and wherein the method further comprises:
receiving, at the mobile communication device, additional single use authorisation data from the payment network; and
storing, by the mobile communication device, the additional single use authorisation data in the memory.

5. The method of any preceding claim, wherein the authorisation data is chip data, the encrypted second unique identifier comprises a plurality of digits and at least some of the plurality of digits are of the encrypted second unique identifier are stored in one of: track 2 data of the chip data; track 2 equivalent data of the chip data; and a tag of an electronic message that is sent to the POS terminal by the mobile communication device.

6. The method of any one of claims 1 to 4, wherein: the authorisation data is chip data comprising track 2 equivalent data; the encrypted second unique identifier comprises a plurality of digits; and the track 2 equivalent data comprises at least: the first unique identifier stored in a primary account number field of the track 2 equivalent data; and at least some of the plurality of digits of the encrypted second unique identifier stored in a discretionary data field of the track 2 equivalent data.

7. A computer-implemented method of processing a payment transaction, comprising:
receiving, at an authorisation server of a payment processing network, an authorisation request message, the authorisation request message including a first unique identifier and an encrypted second unique identifier, the first unique identifier associated with a mobile communication device and a main issuer and the encrypted second unique identifier associated with a second issuer;
extracting, by the authorisation server, the authorisation data from the authorisation request message;
decrypting, by the authorisation server, the encrypted second unique identifier to obtain an unencrypted second unique identifier;
determining, by the authorisation server, the second issuer based on the unencrypted second unique identifier;
generating, by the authorisation server, a modified authorisation request message, the modified authorisation request message containing the unencrypted second unique identifier; and
sending, by the authorisation server to a computing device of the second issuer, the modified authorisation request.

8. The method of claim 7, further comprising:
receiving, at the authorisation server from the mobile communication device, information corresponding to a payment account associated with the unencrypted second unique identifier;
generating, by the authorisation sever, authorisation data comprising the encrypted second unique identifier; and
sending, by the authorisation server to the mobile communication device, the authorisation data.

9. The method of claim 8, wherein the authorisation data is single use, and wherein the method further comprises sending, by the authorisation sever to the mobile communication device, additional single use authorisation data.

10. The method of any one of claims 7 to 9, wherein the authorisation request message further comprises a cryptogram associated with the first unique identifier and the method further comprises one of:
a) verifying, by the authorisation server, the cryptogram; or
b) sending, by the authorisation server to a computing device of the first issuer, the cryptogram; and
c) receiving, at the authorisation server from the computing device of the first issuer, an indication that the cryptogram has been successfully verified.

11. The method of claim 10, wherein the modified authorisation request comprises a verification flag having a value indicating that the cryptogram has been verified.

12. The method of claim 10, further comprising:
generating, by the authorisation server, a second cryptogram, wherein the second cryptogram is associated with the unencrypted second unique identifier;
wherein the modified authorisation request comprises the second cryptogram.

13. The method of claim 10, further comprising:
setting a transaction type of the modified authorisation request equal to a card not present transaction type.

14. A mobile communication device configured to perform the method of any one of claims 1 to 6.

15. A payment processing network computer configured to perform the method of any one of claims 7 to 13.
